# EUROPEAN PATENT APPLICATION

(11) **EP 2 581 677 A1**
(43) Date of publication of application: **17.04.2013**
(21) Application number: 11792473.8
(22) Date of filing: 08.06.2011
(51) Int. Cl.: F24F 11/02, F25D 11/00

(54) **ENERGY MANAGEMENT APPARATUS**

(30) Priority: 09.06.2010 JP 2010132381
(71) Applicant: Panasonic Corporation, Kadoma-shi Osaka 571-8501 (JP)
(72) Inventor: TAKAYAMA, Hisashi, Shiromi, Chuo-ku Osaka 540-6207 (JP); NAKANO, Akio, Shiromi, Chuo-ku Osaka 540-6207 (JP)
(74) Representative: Müller-Boré & Partner Patentanwälte
(86) International application number: PCT/JP2011/063113
(87) International publication number: WO 2011/155516

(57) **Abstract**

A data aggregation part 14 uses, as a data set, setting data for controlling an air-conditioning apparatus 31 and a refrigerating showcase 32, the amount of electricity consumed by the air-conditioning apparatus 31 and the refrigerating showcase 32 and operation data thereof, and environmental data containing outdoor temperatures, and classifies the data set for each outdoor temperature. An environmental condition-specific analyzer 15 obtains optimum setting data for accomplishing energy saving for each outdoor temperature, by using the data set for each outdoor temperature. The environmental condition-specific analyzer 15 also corrects the amount of electricity consumption of the data set on the basis of the number of people in a space counted by a people counter 35. A time zone-specific analyzer 16 obtains optimum setting data for accomplishing energy saving for each time zone by using the optimum setting data for each outdoor temperature.

## Description

### TECHNICAL FIELD

The present invention relates to an energy management apparatus for optimizing the operations of an air-conditioning apparatus and a refrigerating showcase to suppress an increase of energy consumption in a space where the air-conditioning apparatus and the refrigerating showcase are provided.

### BACKGROUND ART

In a foods grocery store that has an air-conditioning apparatus and a refrigerating showcase within one space, it is generally known that the operational states of the air-conditioning apparatus and the refrigerating showcase have impacts on each other's energy consumption. However, the degree to which the air-conditioning apparatus and the refrigerating showcase have impacts on each other varies depending on the constitutions of the air-conditioning apparatus and the refrigerating showcase and the structure of the building that forms the space. For this reason, it is difficult to determine the contents of the operations of the air-conditioning apparatus and the refrigerating showcase in order to suppress the total energy consumption obtained in the space.

Conventionally, it is often the case that not only the contents of the operations but also the rules for determining the contents of the operations are the same regardless of the constitutions of an air-conditioning apparatus and refrigerating showcase and the structure of a building having the air-conditioning apparatus and the refrigerating showcase. Therefore, the contents of the operations are eventually determined based on a sense of a user.

Japanese Patent Application Publication No. 2003-28478 describes a technology that, with due consideration of human comfort, formulates the optimum indoor temperatures for the cooling operation and the heating operation based on a static function for outdoor temperatures, compares a set temperature set by a user with the temperatures derived by the function, and sets the temperature at which the energy consumption is low, as an objective temperature for an air-conditioning apparatus. When using the technology described in this patent document, application of the static function can optimize the indoor temperatures with respect to the outdoor temperature without depending on the senses of individual users, resulting in energy saving.

However, the technology described in this patent document applies the function for determining the set indoor temperature in consideration of human comfort, which does not necessarily accomplish energy saving. In a foods grocery store or the like that has an air-conditioning apparatus and a refrigerating showcase within one space, the operational states of the air-conditioning apparatus and the refrigerating showcase have impacts on each other's energy consumption. Thus, for example, setting the temperature of the air-conditioning device in consideration of human comfort has an impact of an increase of energy consumption on the refrigerating showcase. As a result, the energy consumption of the air-conditioning apparatus and the refrigerating showcase increases as a whole.

Further, in the technology described in the patent document, the relationship between the outdoor temperatures and the indoor temperatures is set fixedly. Therefore, the optimization for accomplishing energy saving cannot be performed, depending on the constitutions of the air-conditioning apparatus and the refrigerating showcase or the structure of the building having the air-conditioning apparatus and the refrigerating showcase. In this case, it is considered that when a data mining technique is used instead of fixedly setting the relationship between the outdoor temperatures and the indoor temperatures, optimum indoor temperatures with respect to the outdoor temperatures for achieving energy saving can be obtained.

Due to a large increase or decrease of the number of people existing in a space, such as a foods grocery store or a food floor of a department store, the amount of heat from the people has an impact on the amounts of energy consumed by the air-conditioning apparatus and the refrigerating showcase of the space. The patent document described above, however, does not take into consideration such a fact that the number of people existing in the space has an impact on the amounts of energy consumed by the air-conditioning apparatus and the refrigerating showcase. Therefore, it still is difficult to optimize the amounts of energy consumed by an air-conditioning apparatus and a refrigerating showcase.

### DISCLOSURE OF THE INVENTION

An object of the present invention is to provide an energy management apparatus that is capable of comprehensively reducing the amounts of energy consumed by an air-conditioning apparatus and a refrigerating showcase by taking into consideration the impacts of the number of people in a space including the air-conditioning apparatus and refrigerating showcase.

An energy management apparatus of the present invention manages the amount of energy that is consumed in a space including an air-conditioning apparatus and a refrigerating showcase, the energy management apparatus comprising: a controller that controls operations of the air-conditioning apparatus and the refrigerating showcase based on setting data; an operation data monitoring part that monitors operation data including the amounts of energy consumed by the air-conditioning apparatus and the refrigerating showcase; an environmental data monitoring part that monitors environmental data including an outdoor temperature around an outdoor unit for the air-conditioning apparatus and the refrigerating showcase; a data aggregation part that correlates the operation data with the environmental data and the setting data, which are collected in the same time zone as the operation data, to obtain a single data set and classifies the data set for each of specific environmental conditions of the environmental data,; an environmental condition-specific analyzer that focuses on the amounts of energy consumed by the air-conditioning apparatus and the refrigerating showcase, which are included in the operation data in the data set, for each of the environmental conditions, to obtain optimum setting data for accomplishing energy saving, for each of the environmental conditions; a time zone-specific analyzer that obtains optimum setting data for accomplishing energy saving, for each of time zones, from an average value of the environmental conditions according to the time zones by using the optimum setting data for each of the environmental conditions that is obtained by the environmental condition-specific analyzer; and a people counter that counts the number of people in the space, wherein the environmental data monitored by the environmental data monitoring part includes the number of people counted by the people counter, and the environmental condition-specific analyzer is configured to correct the setting data based on the number of people included in the environmental data, to obtain the optimum setting data for each of the environmental conditions.

According to the present invention, the setting data of the air-conditioning apparatus and the refrigerating showcase are corrected in consideration of not only the environmental conditions including the outdoor temperature and the indoor temperature of the space in which the air-conditioning apparatus and the refrigerating showcase are provided, but also the impact of the number of people that exist in the space. The present invention, therefore, is advantageous in terms of comprehensively reducing the energy consumption.

Preferably, the energy management apparatus further comprises a function for presenting the setting data for each of the environmental conditions obtained by the environmental condition-specific analyzer.

Preferably, the energy management apparatus further comprises a function for presenting the setting data for the time zones obtained by the time zone-specific analyzer.

Preferably, the energy management apparatus further comprises a setting data transmitter that transmits the optimum setting data for the time zones, which are derived by the time zone-specific analyzer, to the controller, wherein the controller controls the air-conditioning apparatus and the refrigerating showcase by using the setting data received from the setting data transmitter.

Preferably, the setting data transmitter has a function acquiring data for extracting the data set for each of the environmental conditions, by appropriately changing the set temperature of the air-conditioning apparatus.

The data aggregation part may classify the data set by using the outdoor temperature and a humidity of outdoor air as the environmental conditions.

The controller can adopt a configuration for controlling the air-conditioning apparatus and the refrigerating showcase by using the setting data derived by the environmental condition-specific analyzer.

Preferably, the data aggregation part adopts the setting data, the operation data, and the environmental data only for a period of normal operations of the air-conditioning apparatus and the refrigerating showcase.

Preferably, when obtaining the optimum setting data for each of the environmental conditions, the environmental condition-specific analyzer is configured to determine which one of a plurality of predetermined headcount ranges the number of people included in the environmental data is classified as, and to set an average value of the corresponding headcount range to a reference number, and to estimate the amount of energy consumed when the number of people in the space is equal to the reference number.

Preferably, in a cooling operation of the air-conditioning apparatus, the environmental condition-specific analyzer estimates the amount of energy consumed when the number of people in the space is equal to the reference number, by calculating a corrected consumption by multiplying a value obtained by subtracting the reference number from the number of people included in the environmental data, by a headcount correction coefficient α expressing a predetermined increase in consumption per person, and subtracting the corrected consumption from the amount of energy consumed that is included in the operation data.

Preferably, in a heating operation of the air-conditioning apparatus, the environmental condition-specific analyzer estimates the amount of energy consumed when the number of people in the space is equal to the reference number, by calculating a corrected consumption by multiplying a value obtained by subtracting the reference number from the number of people included in the environmental data, by a headcount correction coefficient β expressing a predetermined decrease in consumption per person, and adding the corrected consumption to the amount of energy consumed that is included in the operation data.

Preferably, the environmental condition-specific analyzer extracts a plurality of data sets in which the estimated amounts of energy consumed are relatively small, for each combination of a headcount range and outdoor temperature, and derives the optimum setting data in which the amount of energy consumed is highly likely to be the smallest, from the setting data included in the plurality of extracted data sets.

### BRIEF DESCRIPTION OF THE DRAWINGS

Preferred embodiments of the invention will now be described in further details. Other features and advantages of the present invention will become better understood with regard to the following detailed description and accompanying drawings where:

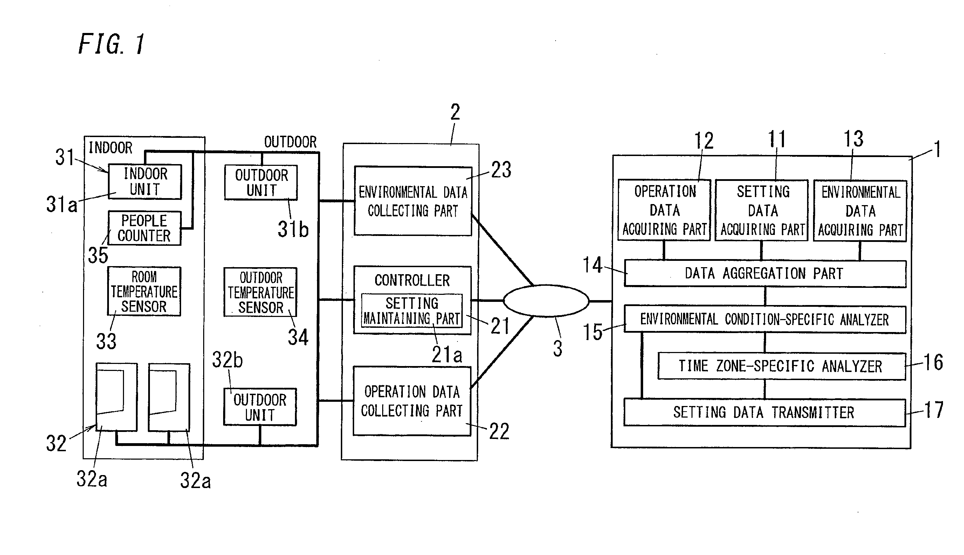

Fig. 1 is a block diagram showing an embodiment.

### BEST MODE FOR CARRYING OUT THE INVENTION

As shown in Fig. 1, the present embodiment illustrates a configuration that has a terminal device 2 for controlling and monitoring an air-conditioning apparatus 31 and a refrigerating showcase 32, and a management apparatus 1 for managing the energy consumed by the air-conditioning apparatus 31 and the refrigerating showcase 32. In the illustrated example, the terminal device 2 and the management apparatus 1 can communicate with each other by a telecommunication line 3. The refrigerating showcase (hereinafter, called "refrigerating unit") 32 may be of a closed type or open type. The effects of the configuration described in the present embodiment are expected particularly in an open-type refrigerating unit.

The management apparatus 1 and the terminal device 2 can be realized by a computer, as dedicated devices. A public network such as the Internet or other dedicated lines can be used as the telecommunication line 3. The function of the management apparatus 1 and the function of the terminal device 2 can be integrated to adopt a configuration for managing energy without performing communications.

The illustrated example simulates a space inside a store such as a grocery store selling food items (hereinafter, called "foods grocery store") but does not prevent the application of the technology of the present embodiment to other spaces such as a department store where the air-conditioning apparatus 31 and the refrigerating unit 32 are used in combination. The air-conditioning apparatus 31 and the refrigerating unit 32 simulate configurations that adjust the temperature environment of a room or storehouse storing the air-conditioning apparatus 31 and the refrigerating unit 32, by consuming electric energy. Therefore, the energy is described as electricity hereinafter. A configuration for adjusting the temperature environment by using fuel gas can be adopted as well.

In the refrigerating unit 32, the amount of electricity consumed for keeping the temperature of the storehouse varies when the ambient temperature changes. As a result, when the refrigerating unit 32 is disposed in the space, the temperature of which is adjusted by the air-conditioning apparatus 31, the amount of electricity consumed by the air-conditioning apparatus 31 is correlated with the amount of electricity consumed by the refrigerating unit 32. Furthermore, the present embodiment takes into consideration the fact that the heat released from people in the space is correlated with the amounts of electricity consumed by the air-conditioning apparatus 31 and the refrigerating unit 32.

In other words, when the amount of heat released from the people increases during a cooling operation of the air-conditioning apparatus 31, the amount of electricity consumed by the air-conditioning apparatus 31 for keeping a set temperature thereof needs to be increased. Meanwhile, when the amount of heat released from the people increases during a heating operation of the air-conditioning apparatus 31, the amount of electricity consumed by the air-conditioning apparatus 31 for keeping the set temperature thereof can be reduced. Similarly, regarding the refrigerating unit 32, the ambient temperature is likely to increase as the number of people in the store increases, and the amount of electricity consumed by the refrigerating unit 32 can be increased in order to keep the temperature inside the storehouse.

The air-conditioning apparatus 31 includes an indoor unit 31a and an outdoor unit 31b, and the refrigerating unit 32 includes an indoor unit 32a and an outdoor unit 32b. The amounts of electricity consumed by the air-conditioning apparatus 31 and the refrigerating unit 32 are affected by set temperatures, which are target values of the temperature inside the room and the temperature inside the storehouse, and an outdoor temperature of the outside where the outdoor units 31b, 32b are installed. Thus, a room temperature sensor 33 for measuring the room temperature of the store and an outdoor temperature sensor 34 for measuring the outdoor temperature in the vicinity of the outdoor units 31b, 32b are provided.

The room temperature measured by the room temperature sensor 33 might vary depending on the location where the room temperature is measured. Due to the correlation between the temperature of the storehouse having the refrigerating unit 32 and the ambient temperature of the indoor unit 32a as described above, the ambient temperature of the indoor unit 32a is desirably measured by the room temperature sensor 33. In order to take into consideration the heat released from the people in the store, it is desired that a representative value of the room temperature of the store be measured. Further, the outdoor temperature sensor 34 desirably measures individual outdoor temperatures of the vicinity of the outdoor units 31b, 32b of the air-conditioning apparatus 31 and the refrigerating unit 32. Note that the outdoor temperature sensor 34 can be omitted.

A people counter 35 for counting the number of people in the store is also disposed in the store. The people counter 35 may be accurate enough to obtain an indication of the number of people in the store, and does not have to accurately measure the number of people one by one. As this type of people counter 35, there is known an active-type device that is provided at an entrance or exit of a store and detects the passage of a person by using an infrared ray or ultrasonic wave, or a passive-type device that detects the passage of a person by using an image captured by a television camera disposed above an entrance or exist of a store. The use of such people counter 35 can estimate the number of people in the store based on the number of people passing through an entrance or exit of the store and the directions of the people passing through the entrance or exit. The present embodiment may adopt a configuration that estimates the number of people in the store based on an image captured by a television camera provided in the store.

The terminal device 2 includes a controller 21 that functions as an operation indication part for indicating operations of the air-conditioning apparatus 31 and the refrigerating unit 32. The controller 21 includes a setting maintaining part 21a for maintaining the set temperature of the air-conditioning apparatus 31 and the set temperature of the refrigerating unit 32. Then, the controller 21 indicates to the air-conditioning apparatus 31 and the refrigerating showcase 32 the set temperatures maintained by the setting maintaining part 21a as the target values. Table 1 shows an example of settings of the setting maintaining part 21a.

**[Table 1]**

| Starting Time | Ending Time | Operation Mode | Set Temperature [°C] | Application Period |
|---|---|---|---|---|
| 0:00 | 7:00 | Stopped | | 6/1-9/30 |
| 7:00 | 10:00 | Cooling | 25 | 6/1-9/30 |
| 10:00 | 17:00 | Cooling | 24 | 6/1-9/30 |
| 17:00 | 21:00 | Cooling | 25 | 6/1-9/30 |
| 21:00 | 24:00 | Stopped | | 6/1-9/30 |

The controller 21 indicates not only the set temperatures but also the operating and stopped states for the air-conditioning apparatus 31 and the refrigerating unit 32, and indicates the cooling operation or the heating operation for the air-conditioning apparatus 31. Moreover, when there are additional operations for the air-conditioning apparatus 31 and the refrigerating unit 32 (e.g., a defrosting operation of the refrigerating unit 32), the controller 21 performs indication for starting and stopping the additional operations. Hereinafter, data that are sent from the controller 21 to provide the indications to the air-conditioning apparatus 31 and the refrigerating unit 32 are called "setting data." In the present embodiment, as shown in Table 1, the setting data include, for example, the set temperatures, the times for starting/ending the operations of the devices, the operation modes (stopped mode, cooling operation, heating operation), the application periods, and the like.

The terminal device 2 includes an operation data collecting part 22 for monitoring the operations of the air-conditioning apparatus 31 and the refrigerating unit 32 and collecting the operation data. The operation data collecting part 22 collects operational states of the air-conditioning apparatus 31 and the refrigerating unit 32 and the amount of electricity consumed by the air-conditioning apparatus 31 and the refrigerating unit 32 per unit time, as the operation data. The operation data collecting part 22 also collects the operation data that are output from the refrigerating unit 32, such as a supply temperature and the temperature inside the storehouse. The operation data collecting part 22 also functions to temporarily store the operation data that are output from the air-conditioning apparatus 31 and the refrigerating unit 32.

The types of the operation data that are output from the air-conditioning apparatus 31 and the refrigerating unit 32 are as illustrated as above, and, when the air-conditioning apparatus 31 functions to, for example, measure the supply temperature of the air-conditioning apparatus 31, the supply temperature can be collected by the operation data collecting part 22.

The terminal device 2 is also provided with an environmental data collecting part 23 that collects the temperatures detected by the room temperature sensor 33 and the outdoor temperature sensor 34 and the number of people in the store that is obtained by the people counter 35, as environmental data. The environmental data collecting part 23 also functions to temporarily storing the room temperature and the outdoor temperature measured respectively by the room temperature sensor 33 and the outdoor temperature sensor 34 and the number of people in the store counted by the people counter 35, as the environmental data. The environmental data collecting part 23 may consider the number of store clerks as the number of people in the store by communicating with a shift management apparatus that manages the shifts of the store clerks.

In the configuration described above, the controller 21, the operation data collecting part 22, and the environmental data collecting part 23 are integrally provided in the terminal device 2 but can be provided individually.

On the other hand, the management apparatus 1 includes a setting data acquiring part 11, an operation data acquiring part 12, and an environmental data acquiring part 13, which acquire the setting data, the operation data, and the environmental data from the controller 21, the operation data collecting part 22, and the environmental data collecting part 23 of the terminal device 2, respectively.

Specifically, the setting data acquiring part 11 acquires the set temperature of the air-conditioning apparatus 31 and the set temperature of the refrigerating unit 32 from the controller 21, and acquires the contents of the operations indicated for the air-conditioning apparatus 31 and the refrigerating unit 32 by the controller 21. The operation data acquiring part 12 acquires the operation data relating to the air-conditioning apparatus 31 and the refrigerating unit 32, from the operation data collecting part 22. The environmental data acquiring part 13 acquires the measured values obtained by the room temperature sensor 33, the outdoor temperature sensor 34, and the people counter 35, from the environmental data collecting part 23, as the environmental data.

Therefore, the operation data acquiring part 12 and the operation data collecting part 22 each function as an operation data monitoring part for monitoring the operation data. The environmental data acquiring part 13 and the environmental data collecting part 23 each function as an environmental data monitoring part for monitoring the environmental data. As will be described hereinafter, because the management apparatus 1 of the present embodiment focuses on the outdoor temperatures out of environmental conditions included in the environmental data, the outdoor temperature sensor 34 also functions as the environmental data monitoring part.

The setting data acquired by the setting data acquiring part 11, the operation data acquired by the operation data acquiring part 12, and the environmental data acquired by the environmental data acquiring part 13 are input to a data aggregation part 14. The data aggregation part 14 correlates the operation data with the setting data and the environmental data indicating the same time as the operation data, to obtain data sets, and classifies each of the data sets according to a specific focused environmental condition. In this case, the outdoor temperatures measured by the outdoor temperature sensor 34 are used as the environmental conditions. The outdoor temperatures around the outdoor unit 31b of the air-conditioning apparatus 31 or the outdoor unit 32b of the refrigerating unit 32 may be used. An average value of the outdoor temperatures around both of the outdoor units or the outdoor temperatures obtained by another outdoor temperature sensor may be used as well.

Here, when the operational state of the air-conditioning apparatus 31 or the refrigerating unit 32 that is included in the operation data acquired from the operation data collecting part 22 by the operation data acquiring part 12 is an abnormal operational state, the data aggregation part 14 exempts the operation data that shows the abnormal operational state, from processing objects. In other words, the data sets do not include the data showing an abnormal operational state of the air-conditioning apparatus 31 or the refrigerating unit 32.

When the data aggregation part 14 obtains data sets that are classified by outdoor temperatures shown by the degree, these data sets are input to an environmental condition-specific analyzer 15. The environmental condition-specific analyzer 15 calculates a sum of the amount of electricity consumed by the air-conditioning apparatus 31 and the amount of electricity consumed by the refrigerating unit 32, the amounts of electricity consumed being included in the operation data of each data set.

In this case, the environmental condition-specific analyzer 15 obtains the number of people in the store from the environmental data, further classifies the data sets, which are classified by outdoor temperatures shown by the degree, by headcount ranges each having twenty people in the store, and corrects the sum of the consumed electricity by using headcount correction coefficients α, β that are set appropriately. In other words, the environmental condition-specific analyzer 15 determines which one of a plurality of predetermined headcount ranges the number of people included in the environmental data is classified into. The plurality of headcount ranges include, for example, a headcount range of 1 to 20 people, a headcount range of 21 to 40 people, and the like. The headcount correction coefficients α, β are set individually for the cooling operation and the heating operation of the air-conditioning apparatus 31. The headcount correction coefficient α for the cooling operation represents an increase in the amount of electricity consumed per person, and the headcount correction coefficient β for the heating operation represents a decrease in the amount of electricity consumed per person. In other words, the unit of the headcount correction coefficients α, β is [Wh/person]. Because the headcount correction coefficients α, β need to be set by an actual measurement, the environmental condition-specific analyzer 15 is desirably provided with a parameter correction part (not shown) for correcting the headcount correction coefficients α, β by an actual measurement.

An average value of each headcount range of people in the store is defined as a reference number of the headcount range in advance (e.g., the reference number of a headcount range of 1 to 20 people is 10, and the reference number of a headcount range of 101 to 120 people is 110). The environmental condition-specific analyzer 15 sets the average values of the headcount ranges into which the actual number of people in the store included in the environmental data is classified, to the reference numbers used for correction. When using, as a correction value of the amount of electricity consumption, a value obtained by multiplying an increase or a decrease with respect to the reference number by the headcount correction coefficient α, β, the amount of electricity consumption to be obtained when the number of people in the store is the reference numbers can be estimated from the actual amount of electricity consumption.

Specifically, in the cooling operation of the air-conditioning apparatus 31, the environmental condition-specific analyzer 15 can estimate the amount of electricity consumption to be obtained when the number of people in the store is equal to the reference numbers, by calculating an amount of corrected consumption by multiplying a value, which is obtained by subtracting the reference number from the number of people in the store included in the environmental data, by the headcount correction coefficient α, and then subtracting the amount of corrected consumption from the actual amount of electricity consumption included in the operation data. In the heating operation of the air-conditioning apparatus 31, the environmental condition-specific analyzer 15 also can estimate the amount of electricity consumption to be obtained when the number of people in the store is equal to the reference numbers, by calculating the amount of corrected consumption by multiplying a value, which is obtained by subtracting the reference number from the number of people in the store included in the environmental data, by the headcount correction coefficient β and adding the corrected consumption to the actual consumption included in the operation data.

The environmental condition-specific analyzer 15 uses the corrected amounts of electricity consumption described above, to calculate the sum of the amount of electricity consumed by the air-conditioning apparatus 31 and the amount of electricity consumed by the refrigerating unit 32. For each combination of a headcount range of the people in the store and the outdoor temperature, a plurality of data sets having relatively small sums of the amounts of electricity consumed by the air-conditioning apparatus 31 and the refrigerating unit 32 are extracted. Further, based on the setting data included in the plurality of extracted data sets, optimum energy saving setting data, with which the sum of the amounts of electricity consumed by the air-conditioning apparatus 31 and the refrigerating unit 32 is highly likely to be the smallest, is derived.

In this case, when deriving the optimum energy saving setting data with which the sum becomes the minimum based on each combination of a headcount range of the people in the store and the outdoor temperature, the environmental condition-specific analyzer 15 first selects, as for operation states such as an operation mode in the setting data, a majority operational state as the setting data. Of the setting data, regarding the values such as the set temperatures, the average value of the values in the data set that indicates the selected majority operational state is calculated as the setting data, thereby determining the optimum energy saving setting data. In this case, in consideration of the distribution of the sum for each combination of a headcount range of the people in the store and the outdoor temperature, the environmental condition-specific analyzer 15 may correct the setting data such that the optimum energy saving setting data express continuous values with respect to the number of people in the store and the outdoor temperature.

Table 2 shows an example of the optimum energy saving setting data with respect to the outdoor temperature, which is derived by the environmental condition-specific analyzer 15 in relation to a certain headcount range. In Table 2, the room temperatures represent the average values of the room temperatures with respect to the outdoor temperatures based on the environmental data, "air-conditioning operational state" represents the operation modes of the air-conditioning apparatus 31 in the optimum energy saving setting data, and "air-conditioning set temperature" represents the set temperatures of the air-conditioning apparatus 31 in the optimum energy saving setting data. The number of samples represents the size of the number of the data sets which are sample data classified by the data aggregation part 14. That is, a circle "O" means that the number of sample data items are sufficient and that the optimum energy saving setting data are highly reliable, and a triangle "Δ" means that the number of sample data items is slightly smaller. The setting data shown in Table 2 are values obtained when the number of people is set as the reference number. Note in Tables 2 and 3 that "S" indicates the stopped mode and "C" the cooling operation mode.

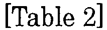

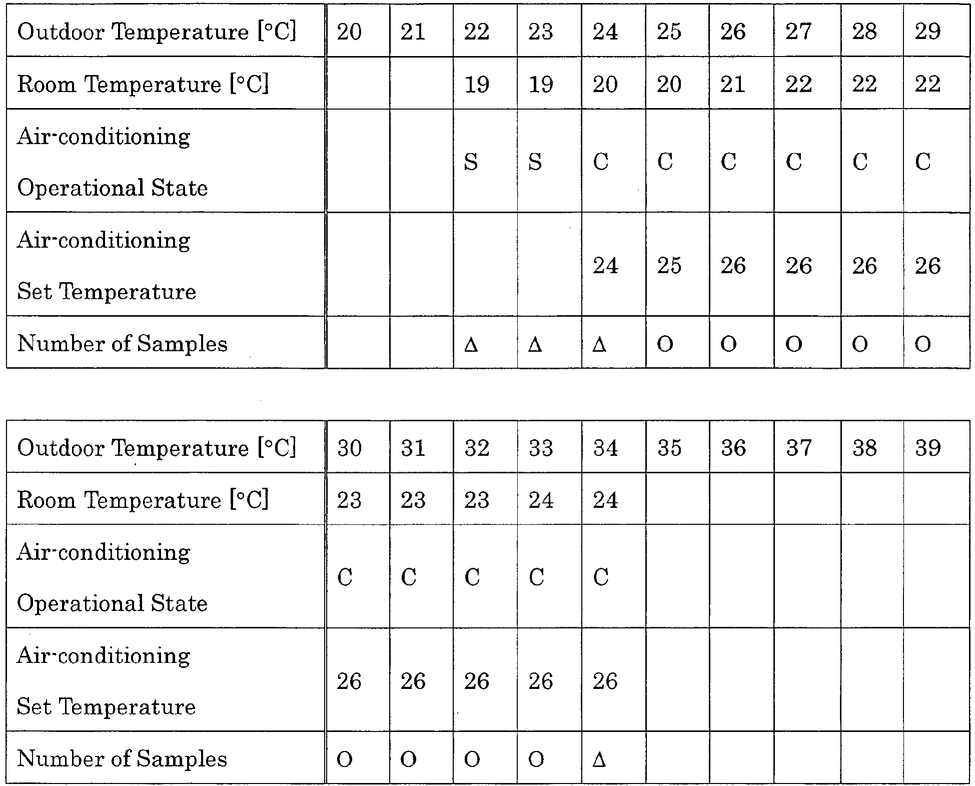

The management apparatus 1 further includes a time zone-specific analyzer 16 that allocates the setting data for each time zone by using the optimum energy saving setting data for each combination of a headcount range of the people in the store and the outdoor temperature in which the sum obtained by the environmental condition-specific analyzer 15 becomes the minimum. The time zone-specific analyzer 16 first calculates the average value of the outdoor temperatures for each time zone (e.g., hourly time zone after the hour) and the average value of the number of people in the store. In other words, a pair of average values of the number of people in the store and the outdoor temperature is obtained for each time zone.

The time zone-specific analyzer 16 compares the obtained average value pair with the optimum energy saving setting data for each combination of a headcount range of the people in the store and the outdoor temperature that is obtained by the environmental condition-specific analyzer 15, and thereby obtains the setting data corresponding to the average values. The setting data are the optimum energy saving setting data, with which the sum of the amounts of electricity consumed by the air-conditioning apparatus 31 and the refrigerating unit 32 is highly likely to be the smallest in each time zone (energy saving is accomplished). Energy saving can be accomplished by presenting the obtained optimum energy saving setting data to a user (an administrator or the like who manages the energy consumed by the foods grocery store) by using a monitor (not shown).

The management apparatus 1 further may include a setting data transmitter 17 that transmits the setting data for each time zone that is obtained by the time zone-specific analyzer 16 to the controller 21 and changes the setting data maintained by the setting maintaining part 21a of the controller 21. With the setting data transmitter 17, the controller 21 operates the air-conditioning apparatus 31 and the refrigerating unit 32 by automatically using optimum setting data in accordance with the outdoor temperature and the number of people in the store.

Table 3 shows an example of the setting data for each time zone that is obtained by the time zone-specific analyzer 16. The values for the time zones shown in Table 3 represent a time zone between a certain hour and the next hour (that is, every one hour from 00min to 59min). In addition, "current air-conditioning setting" indicates the setting data set in the setting maintaining part 21a of the controller 21 and "recommended air-conditioning setting" indicates the optimum energy saving setting data obtained by the time zone-specific analyzer 16. In Table 3, the values under "C" indicate the set temperatures [°C].

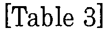

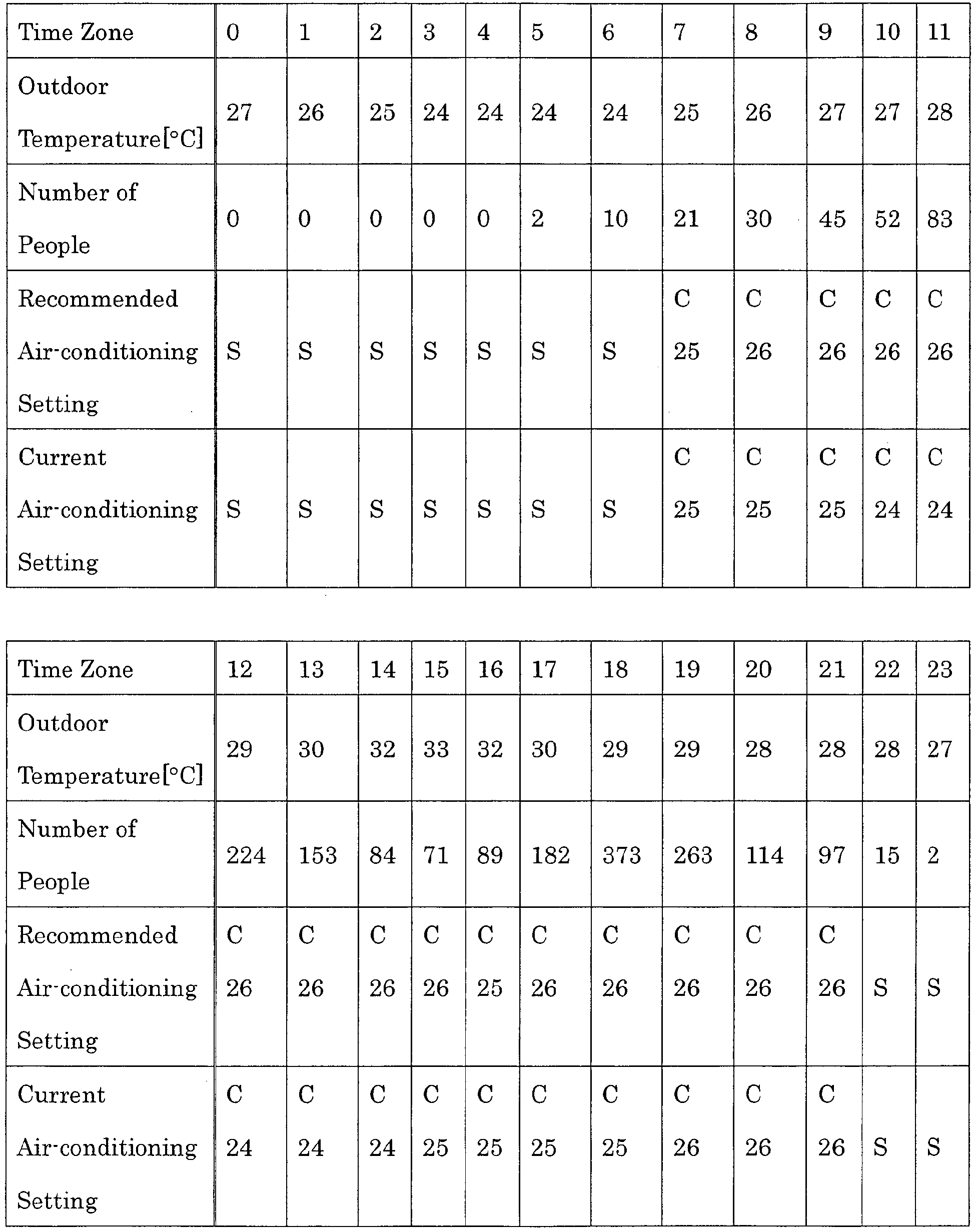

When presenting the setting data shown in Table 3 to the user, the number of visiting customers for each time zone and sale proceeds of each time zone may be displayed at the same time. Furthermore, a graph with a horizontal axis showing time may be displayed in order to illustrate the transitions of the optimum setting data, the environmental data, the number of visiting customers, and the sale proceeds through time.

In the examples described above, the data aggregation part 14, the environmental condition-specific analyzer 15, and the time zone-specific analyzer 16 focus on the outdoor temperatures other than the number of people in the store, but a humidity of outdoor air may be used in addition to the outdoor temperatures. Generally, because a sensible temperature tends to increase as a relative humidity increases, energy saving corresponding to the sensible temperature can be accomplished in consideration of the outdoor humidity in addition to the outdoor temperature.

Incidentally, in the configuration example described above, the setting data transmitter 17 of the management apparatus 1 transmits the setting data obtained by the time zone-specific analyzer 16 to the setting maintaining part 21a of the controller 21, and the controller 21 controls the air-conditioning apparatus 31 and the refrigerating unit 32 in each time zone by using the setting data. In response thereto, the setting data transmitter 17 may transmit the setting data corresponding to a combination of outdoor temperature and a headcount range of the number of people in the store, to the setting maintaining part 21a of the controller 21, the combination being obtained by the environmental condition-specific analyzer 15. Then, the controller 21 may control the air-conditioning apparatus 31 and the refrigerating unit 32 in real time by using the setting data, in accordance with the outdoor temperature and the number of people in the store.

Note that the setting data transmitter 17 may appropriately change the set temperatures of the air-conditioning apparatus 31 within a range of predetermined upper and lower limits and then transmit the setting data to the controller 21, so that the data aggregation part 14 can obtain a sufficiently large number of data sets for each outdoor temperature.

It is preferred that the data aggregation part 14 do not aggregate the data for a time zone in which there occurs a problem in the air-conditioning apparatus 31 or the refrigerating unit 32 and a time zone that has the impact of the problem. The time zone having the impact of the problem means a time zone from time when the problem is solved to the time when a normal operational state is obtained.

In the configuration example described above, the results obtained by the management apparatus 1 are transmitted to the terminal device 2 through the telecommunication line 3 and displayed on the monitor provided in the terminal device 2. However, the results may be displayed in conjunction with the management apparatus 1. A configuration for displaying the results in another device different from the management apparatus 1 and the terminal device 2 via the telecommunication line 3 may be adopted.

Several preferred embodiment of the present invention were described above, but various corrections and modifications can be made by those skilled in the art without departing the original spirit and scope of the present invention, i.e., the scope of claims.

## Claims

1. An energy management apparatus for managing the amount of energy that is consumed in a space including an air-conditioning apparatus and a refrigerating showcase,
the energy management apparatus comprising:
a controller that controls operations of the air-conditioning apparatus and the refrigerating showcase based on setting data;
an operation data monitoring part that monitors operation data including the amounts of energy consumed by the air-conditioning apparatus and the refrigerating showcase;
an environmental data monitoring part that monitors environmental data including an outdoor temperature around an outdoor unit for the air-conditioning apparatus and the refrigerating showcase;
a data aggregation part that correlates the operation data with the environmental data and the setting data, which are collected in the same time zone as the operation data, to obtain a single data set and classifies the data set for each of specific environmental conditions of the environmental data,;
an environmental condition-specific analyzer that focuses on the amounts of energy consumed by the air-conditioning apparatus and the refrigerating showcase, which are included in the operation data in the data set, for each of the environmental conditions, to obtain optimum setting data for accomplishing energy saving, for each of the environmental conditions;
a time zone-specific analyzer that obtains optimum setting data for accomplishing energy saving, for each of time zones, from an average value of the environmental conditions according to the time zones by using the optimum setting data for each of the environmental conditions that is obtained by the environmental condition-specific analyzer; and
a people counter that counts the number of people in the space,
wherein the environmental data monitored by the environmental data monitoring part includes the number of people counted by the people counter, and the environmental condition-specific analyzer is configured to correct the setting data based on the number of people included in the environmental data, to obtain the optimum setting data for each of the environmental conditions.

2. The energy management apparatus according to claim 1, further comprising a function for presenting the setting data for each of the environmental conditions obtained by the environmental condition-specific analyzer.

3. The energy management apparatus according to claim 1 or 2, further comprising a function for presenting the setting data for each of the time zones obtained by the time zone-specific analyzer.

4. The energy management apparatus according to any one of claims 1 to 3, further comprising a setting data transmitter that transmits optimum setting data for each of the time zones derived by the time zone-specific analyzer, to the controller,
wherein the controller controls the air-conditioning apparatus and the refrigerating showcase by using the setting data received from the setting data transmitter.

5. The energy management apparatus according to claim 4, wherein the setting data transmitter has a function acquiring data for extracting the data set for each of the environmental conditions, by appropriately changing a set temperature of the air-conditioning apparatus.

6. The energy management apparatus according to any one of claims 1 to 5, wherein the data aggregation part classifies the data set by using the outdoor temperature and a humidity of outdoor air as the environmental conditions.

7. The energy management apparatus according to any one of claims 1 to 6, wherein the controller controls the air-conditioning apparatus and the refrigerating showcase by using the setting data derived by the environmental condition-specific analyzer.

8. The energy management apparatus according to any one of claims 1 to 7, wherein the data aggregation part adopts the setting data, the operation data, and the environmental data only for a period of normal operations of the air-conditioning apparatus and the refrigerating showcase.

9. The energy management apparatus according to any one of claims 1 to 8, wherein, when obtaining the optimum setting data for each of the environmental conditions, the environmental condition-specific analyzer is configured to determine which one of a plurality of predetermined headcount ranges the number of people included in the environmental data is classified as, and to set an average value of the corresponding headcount range to a reference number, and to estimate the amount of energy consumed when the number of people in the space is equal to the reference number.

10. The energy management apparatus according to claim 9, wherein, in a cooling operation of the air-conditioning apparatus, the environmental condition-specific analyzer estimates the amount of energy consumed when the number of people in the space is equal to the reference number, by calculating a corrected consumption by multiplying a value, which is obtained by subtracting the reference number from the number of people included in the environmental data, by a headcount correction coefficient α expressing an increase in a predetermined consumption per person, and subtracting the corrected consumption from the amount of energy consumed that is included in the operation data.

11. The energy management apparatus according to claim 9, wherein, in a heating operation of the air-conditioning apparatus, the environmental condition-specific analyzer estimates the amount of energy consumed when the number of people in the space is equal to the reference number, by calculating a corrected consumption by multiplying a value, which is obtained by subtracting the reference number from the number of people included in the environmental data, by a headcount correction coefficient β expressing a decrease in a predetermined consumption per person, and adding the corrected consumption to the amount of energy consumed that is included in the operation data.

12. The energy management apparatus according to claim 10 or 11, wherein the environmental condition-specific analyzer extracts a plurality of data sets in which the estimated amounts of energy consumed are relatively small, for each combination of a headcount range and outdoor temperature, and derives the optimum setting data in which the amount of energy consumed is highly likely to be the smallest, from the setting data included in the plurality of extracted data sets.
